Europäisches Patentamt

European Patent Office

Office européen des brevets

(11) Publication number: **0 097 040**
**B1**

# (12) EUROPEAN PATENT SPECIFICATION

(45) Date of publication of patent specification: **29.03.89**

(21) Application number: **83303363.2**

(22) Date of filing: **10.06.83**

(51) Int. Cl.⁴: **A 47 C 7/18**

(54) Process for preparing integrally molded seats.

(30) Priority: **12.06.82 JP 100855/82**

(43) Date of publication of application:
**28.12.83 Bulletin 83/52**

(45) Publication of the grant of the patent:
**29.03.89 Bulletin 89/13**

(84) Designated Contracting States:
**AT DE FR GB IT SE**

(56) References cited:
**FR-A-2 204 116**
**FR-A-2 439 525**

(73) Proprietor: **NAMBA PRESS WORKS CO. LTD.**
**3-8 Kojima Ogawa 8-chome**
**Kurashiki City Okayama Prefecture (JP)**

(72) Inventor: **Ogawa, Taro**
**3-52, Kojimma Ajinokami 1-Chome**
**Kurashiki City Okayama Pref. (JP)**

(74) Representative: **Allden, Thomas Stanley et al**
**A.A. THORNTON & CO. Northumberland House**
**303-306 High Holborn**
**London WC1V 7LE (GB)**

Courier Press, Leamington Spa, England.

## Description

This invention relates to a process for preparing integrally moulded seats.

In accordance with the present invention there is provided a process for moulding a foamed seat integrally with a cover material therefor in order to produce a seat cushion, comprising the steps of:

a) providing a cover material having a top portion and a side portion conjoined together at a joint, the top portion having an area approximately equal to an area of a top surface of the seat cushion, the side portion being an elongate member having a length sufficient to encircle the overall periphery of the top portion and a width sufficient to cover the sides of the foamed seat to be produced, opposite longitudinal ends of the elongate member being not secured to each other and overlapping with each other;

b) providing a shaping and foaming mould composed of an upper mould half and a lower mould half, the upper mould half having a top wall and side walls defining respectively a bottom and sides of the foamed seat to be produced, the lower mould half having a top surface configured correspondingly to configurations of the top surface of the seat and having suction ports formed therethrough, the two halves being closable at a mating face therebetween,

c) setting the cover material in the mould by positioning the joint along the mating face such that only the top portion of the cover material is in contact with the top surface of the lower mould half, and the side portion and the joint are left outside the mould,

d) closing the upper and lower mould halves relative to each other to clamp the cover top portion at its circumferential edge immediately inside the joint so that the top portion will not be displaced from the position initially set in the mould,

e) heating the top portion of the cover material to a temperature at which the material of the top portion is softened for stretching under tension,

f) vacuum shaping the heated top portion into the configurations of the top surface of the lower mould half by vacuum operation through the suction ports,

g) supplying foaming stock onto the shaped top portion of the cover material placed in the closed mould halves to cause the stock to foam thereby to secure the top portion of cover material at its rear face integrally with the top surface of the foamed seat,

h) taking out from the mould the foamed seat with said top portion of the cover material adhered integrally thereto and the side portion unadhered to the sides of the foamed seat, and

i) enveloping the sides of the foamed seat with the unadhered side portion of the cover material to complete the integrally moulded sitting part of the seat cushion.

Automobile seats generally comprise back portions against which drivers or passengers lean their backs and sitting portions on which they sit. Such seats, particularly sitting portions thereof, are conventionally manufactured by various methods among which is included a process for moulding foamed seat bodies integrally with covering materials enveloping the bodies. One such integrally moulding process comprises a) placing the covering material in the lower half of a shaping and foaming mould, b) shaping the covering material into configurations corresponding to the inner surface of the lower half of the mould by vacuuming through ports formed in the inner surface of the lower mould half and connected to a vacuum source, c) pouring foaming stock, for example, molten polyurethane stock, onto the shaped covering material in the lower half of the mould, and d) closing upper and lower mould halves together and causing the stock to foam by heat and pressure thereby to totally combine together the foamed body and covering material enveloping the body.

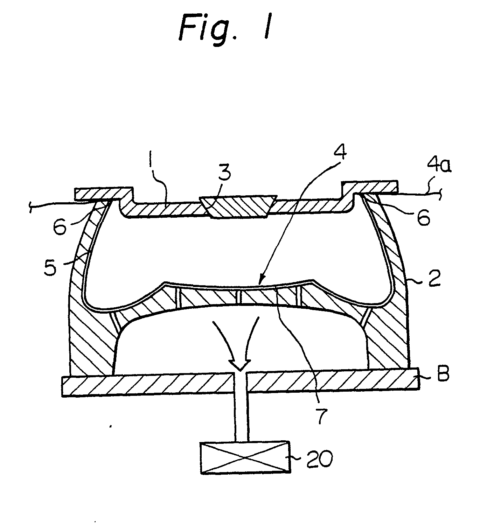

The shaping and forming mould utilized in the aforesaid prior art process is illustrated in Fig. 1, in which the mould comprises an upper half 1 of the plate-like shape and a lower half 2 having a trapezoidal cross-sectional configuration. The upper mould half 1 is provided with an opening 3 for pouring polyurethane foaming stock and closable with an appropriate lid. The lower mould half 2 has an opening upper edge and suction ports at the bottom portion which corresponds in configurations to upper surface configurations of the seat to be formed. The lower mould half 2 is supported on a mounting base B. A covering material 4 is placed in the lower mould half 2 such that its central portion or top portion 7 is in touch with the bottom surface of the lower mould half 2 and its surrounding portions which will form the four sides of a finished seat that has its lower edges 6 positioned adjacent to the upper edge of the mould 2. Then, the upper mould half 1 is closed against the lower mould half 2, and upon softening the covering material 4 by heating, vacuum is operated through suction ports in the mould bottom to cause the top or central portion 7 and the surrounding or side portion 5 of the covering material 4 to be shaped into configurations of the bottom surface and side wall surface of the lower mould half 2, respectively. Onto the covering material 4 thus shaped is poured foaming stock such as molten polyurethane for making a foamed body. Upon completion of the foaming operation, a seat is obtained in the form of the foamed body enveloped totally by an integrally combined with the covering material at its upper and four (4) side portions.

The described prior art process, however, has many disadvantages which include inaccuracy in the shaping of the covering material due to great stretching needed for the covering material to be deeply drawn conforming to the configurations of the deep lower mould half. After removal from the mould, shaped covering material on the foamed body tends to shrink for overcoming excessive stretching forces thereby to spoil shape stability of the resultant seat. Moreover, the covering material is a one-piece sheet without any seam or joint so as to endure the deep stretching forces so that it is infeasible to use, in making four sides of the seat, material different in colour or quality from the central portion in accordance with the purposes of designing. In addition, as seen in Fig. 1, the covering material 4 must have wide margins 4a to be effectively clamped by the mould halves 1 and 2 and these margins will never be used as a part of the seat after removal from the mould.

FR—A—2204116 discloses a process for moulding a foamed seat which differs *inter alia* from the process of the present invention in that the side portion of cover material is not conjoined to the top portion at the joint until the foamed seat with the top portion of the cover material adhered integrally thereto has been taken out from the mould.

By, in accordance with the invention, conjoining the top and side portions of the cover material at the joint as an initial step of the process, the joint can be used to easily, rapidly and accurately set the top portion of the cover material in the mould without any fear of producing wrinkles or slacks therein. Moreover, the top and side portions may be more easily conjoined prior to the moulding operation than afterwards.

There is also disclosed in FR—A—2439525 a process for moulding a foamed seat which differs *inter alia* from the process of the present invention by a single piece of material constituting the entire cover material so that the cover material is deficient of the joint by which, as discussed above, the cover material may be advantageously set in the mould. Moreover, and as will be more fully described hereinafter, certain advantages are obtained by employing a multi-piece cover material in that the top and side portions may be of different quality and/or colour materials.

In order that the invention may be well understood there will now be described some preferred embodiments thereof, given by way of example, reference being made to the accompanying drawings, in which:

Fig. 1 represents schematically a sectional view of a shaping and foaming mould employed in a prior art process;

Fig. 2 represents a sectional view of a shaping and foaming mould employed in a process embodying the present invention, showing a covering material placed onto a lower mould half against which an upper mould half is closed;

Fig. 2a shows a modified form of a shaping and foaming mould for use in a process embodying the present invention;

Fig. 3 is a perspective view partly broken away of a covering material to be used for enveloping and being secured with a foamed seat body through an integral moulding process embodying the present invention;

Fig. 4 represents a sectional view of the mould of Fig. 2 showing polyurethane foaming stock being poured into the closed mould and onto the shaped cover material shown in a phantom line;

Fig. 5 represents a sectional view of a foamed body which, at its top surface, is integrally secured with a top portion of the cover material, side portions of the cover material being illustrated in an inverted position by solid lines and in a returned position by phantom lines;

Fig. 6 represents a sectional view of an integrally moulded seat formed by a process embodying the present invention mounted onto a frame structure;

Fig. 7 represents a sectional view of the lower mould half of Fig. 2 over which the covering material is set in a manner different from the previous examples;

Fig. 8 shows a modified manner of the process of the present invention in which a covering material is set to an upper mould half; and

Fig. 9 shows yet further manner in which a covering material is set to an upper mould half in a process embodying the present invention.

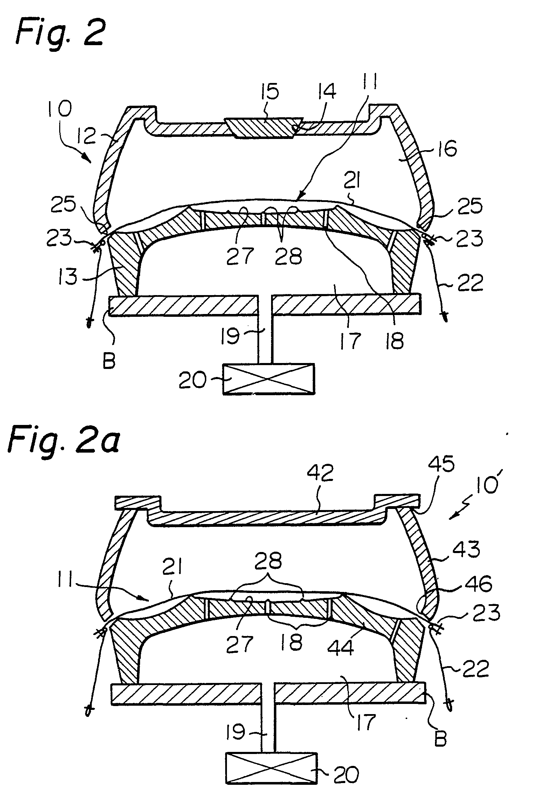

Referring to Figs. 2 to 6, a preferred embodiment of the invention will be specifically described.

A shaping and foaming mould is shown in cross-section generally at 10 in Fig. 2 in which a cover material is also shown generally at 11 schematically in a state in which it is set in a mould. Specifically, the mould 10 is divided into two halves, i.e. an upper half 12 and a lower half 13, which are closed against each other at a mating face 25 provided at a location corresponding to the border edge between the sides and the top of the seat to be produced. The upper mould half 12 has at its top wall an opening 14 for pouring polyurethane stock which is closable with a lid 15 and defines a cavity 16 which, as illustrated in Fig. 2, has a substantially truncated pyramidal contour which corresponds to the contour of the seat to be produced in an inverted state. Alternatively, the cavity 16 may be made a substantially rectangular solid where a substantially rectangular solid seat is to be produced.

The lower mould half 13 has a top surface 27 which will form a bottom of the cavity 16 when the upper mould half is closed thereagainst and a peripheral edge which will form the mating face 25 when two halves 12 and 13 are closed against each other. The lower half 13 has at its top surface 27 a plurality of suction ports 18 which communicate with a sealed chamber 17 which, in turn, communicates through a pipe or conduit 19 with a vacuum source or suction pump 20. As seen from the drawings, the top surface 27 of the lower mould half 13 is formed with concave configurations conforming to the convex configurations usually formed on the top surface of the seat. In addition, the top surface 27 may be provided with any patterns or figures 28, such as patterns similar to those made by quilting operation, which are desired to be produced on the top surface of the seat.

The covering material 11, in Fig. 2, is turned inside out and envelops the top surface 27 of the lower mould half 13 with its cover top 21 and the side walls of the lower half 13 with its cover side 22. Although the cover side 22 may appear to be plural pieces in the drawings, it is in reality a continuous piece surrounding the side walls of the lower mould half 13.

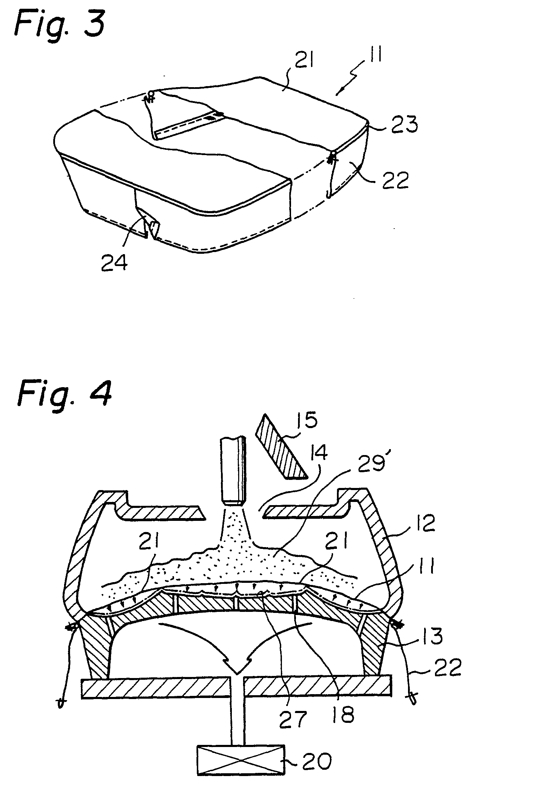

Referring to Fig. 3, the covering material 11 to be used for the seat having an inverted truncated pyramidal configuration is shown in a perspective view partly broken away. The covering material 11 is made up of the cover top 21 and the cover side 22 conjoined together at a joint 23 by means of sewing or welding techniques. It is a feature of the present invention that a non-one-piece material can be employed as the cover material in the process for integrally moulding the foamed seat. In the illustrated embodiment, the cover material 11 is intended to be used for enveloping the seat of the inverted truncated pyramidal configuration so that its cover side 22 is made narrower downwards as shown in Fig. 3. In this case, it is preferable to form at least one cut out portion 24 in the cover side 22 for the purpose of making easier the placing of the cover material 11 onto the lower mould half 13 in the inverted state. Two adjacent edges forming the cut out portion 24 are preferably made such that they overlap one over the other when the cover material 11 envelops the foamed body with its cover side 22 as will be explained in more detail hereinafter. Of course, the covering material will be a rectangular solid or flat box type without bottom where the seat to be produced is of substantially rectangular solid form.

The cover top 21 may be made of leather-like polyvinyl chloride sheets, polyvinyl chloride films or woven or non-woven fabrics. When fabrics are utilized as the cover top, linings such as polyvinyl chloride films and the like should preferably be applied to the rear surface of the fabrics or any treatment suitable to decrease air permeability of the fabrics should be conducted.

The cover side 22 may be made of material the same as or different from that of the cover top 21. As mentioned, hereinbefore, the cover side 22 is advantageously made of different material in colour and/or quality from that of the cover top 21 for designing purposes and/or economical reasons.

In performing moulding operations, the cover material 11 is placed onto the lower mould half 13 in the reversed state as shown in Fig. 2, with the outer surface of the cover top 21 in contact with the top surface 27 of the mould half 13 and with the cover side 22 turned inside out enveloping the side walls of the mould half 13. The inner or rear surface of the cover top 21 is facing to the mould cavity 16 for receiving foaming stock thereon as will be described later.

After setting the cover material 11 in the mould 10, heating may be conducted with respect to the cover top 21 which is to be positioned within the interior of the mould 10. This serves to easily shape the cover top 21 into the configurations of the top surface 27 of the lower mould half 13 by means of vacuum operation through the ports 18. Heating may be achieved by means of infrared heating means or blowing of hot air through the opening 14 of the upper mould half 12 when closed onto the lower mould half 13.

Then, foaming stock 29' such as, for example, molten polyurethane composition, will be poured into the mould. Prior to this, with the upper and lower halves 12 and 13 closed against each other, suction is performed through the ports 18 of the lower half 13 by the suction pump 20 to evacuate the space between the cover top 21 and the mould top surface 27 so as to deform and shape the cover top 21 into the concave configurations with small projections 28 of the mould half 13 as shown in the phantom line in Fig. 4. Onto the thus shaped cover top 21, molten polyurethane stock 29' is supplied through the opening 14 of the upper mould half 12 into the cavity 16 and allowed to foam in situ until it densely fills the cavity 16.

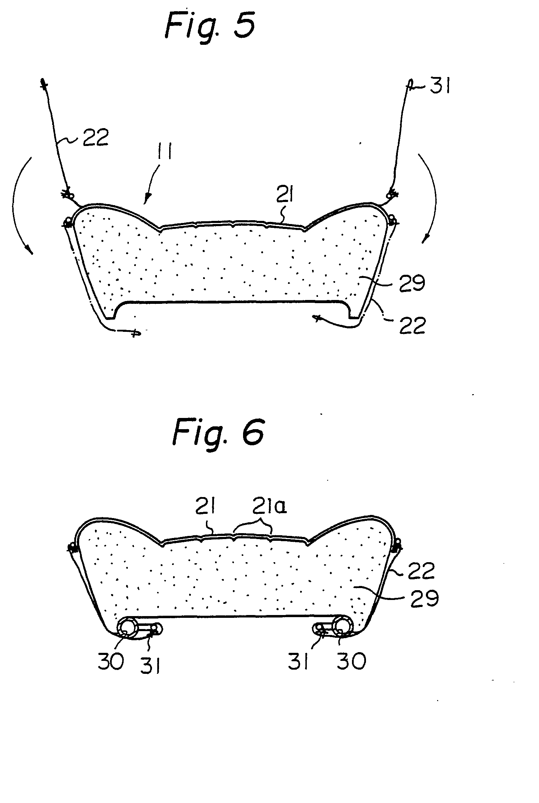

Upon completion of the foaming operation, the foamed body 29 thus formed is taken out from the mould 10 with the cover top 21 integrally secured to the top surface of the foamed body through the moulding action. This foamed body 29 with the integral cover top 21 is shown in Fig. 5 in the returned state after removal from the mould in which the cover side 22 is schematically shown upwards in solid lines. Then, the cover side 22 will be turned and lowered as indicated by arrow marks to the phantom line positions in which it will cover the sides of the foamed seat body 29.

In Fig. 6, the foamed body 29 enveloped totally with the cover top 21 and the cover side 22 is shown which is mounted on an appropriate frame structure 30 of the seat and secured thereto by fixing the lower end 31 of the cover side 22 to the frame structure 30, thus producing the integrally moulded sitting portion of the seat. Where the foamed body 29 is of inverted trapezoidal section as illustrated in Figs. 5 and 6, the cut out portion 24 as described before and shown in Fig. 3 is extremely useful to easily conduct turning of the cover side 22 from the solid line position to the phantom line position.

Any desired patterns such as those 21a similar to quilting patterns may readily be developed in the surface of the cover top 21 through the use of the lower mould half which is formed at its top surface with suitable configurations or figures corresponding to the patterns desired for the cover top, thus obviating the quilting operations conventionally performed individually to the top portion of the cover material for designing or decoration purposes and the sewing or bonding processes for attaching the cover material to the separately prepared foam body.

Reverting to Fig. 2a, a variation of the previously described shaping and foaming mould of Fig. 2 will be described. The mould 10' shown in Fig. 2a comprises an upper section 42 having no opening similar to the opening 14 in the previous embodiment, a middle section 43 and a lower section 44 which corresponds to the lower mould half 13 in the previous embodiment. The upper section 42 and the middle section 43 are separable from and engageable with each other at an upper mating face 45. The middle section 43 and the lower section 44 have their mating face therebetween, i.e., a lower mating face at 46. The lower section 44 has the same configurations, patterns and parts, etc. as those of the mould half 13, which are indicated by the same reference numerals, such as the sealed chamber 17, suction ports 18, top surface 27, projections 28, etc. The cover material 11 is placed onto the lower section 44 and shaped into the desired configurations in the same manner as in Figs. 2 and 4.

In operation, the upper section 42 is opened and the foaming stock is poured into the cavity formed by the middle and lower sections 43 and 44. Then, the upper section 42 is re-closed at the mating face 45 to accomplish the foaming operation. Upon completion of foaming, the upper section 42 is again opened and removed from the middle section 43 to take out the resultant foamed body with the cover material secured at its top integrally therewith.

The structure of the mould 10' of the Fig. 2a variation permits the foamed body to be easily released from the mould 10', particularly at its corner portions adjacent to the upper mating face 45.

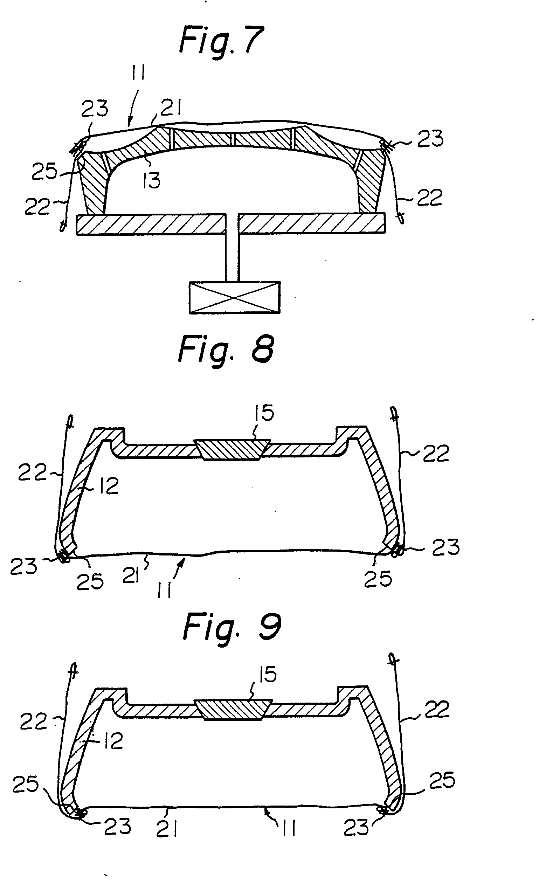

The covering material 11 may be set in the mould in various manners of which a few examples are illustrated in Figs. 7, 8 and 9.

Fig. 7 illustrates an example in which the cover material 11 is placed on the lower mould half 13 with its joint 23 positioned on and at the mating face 25, compared to the previous examples as shown in Figs. 2 or 2a in which joint 23 is positioned outside the mating face 25. If the upper mould half 12 as shown in Fig. 2 is firmly closed on the mating face 25, setting of the cover material 11 shown in Fig. 7 is effective to obtain the desired product similar to that shown in Fig. 5 except that the position of the joint 23 is shifted slightly upwards. In this manner, the foamed body will be integrally secured with the cover top to a point closely adjacent to the joint 23.

Figs. 8 and 9 illustrate examples in which the cover material 11 is set to the upper mould section instead of the lower section. Setting the cover material in these manners obviates the need to turn the side portion of the cover inside out or vice versa. In Fig. 8, the joint 23 of the cover material is positioned outside the mating face 25 of the upper mould section, whereas in Fig. 9 the joint 23 is positioned at the mating face 25 so as to be clamped by the closed mould halves. The setting manner in Fig. 9 provides the same advantage as that of Fig. 7.

It will be appreciated from the foregoing description that the present invention has attained many effects and advantages over the previously described prior art process employing the shaping and forming mould of Fig. 1. Since setting of the cover material in the mould can be done easily, rapidly and accurately in the process of the present invention without the fear of producing wrinkles or slacks in the portion of the cover material that is to be subject to shaping and moulding action, a mass production process for integrally moulding foamed seats of highly stable product quality can be achieved which otherwise would be of poor productivity and stability due to the difficult setting of the cover material in the aforesaid prior process. As only the cover top is subject to shaping action under lesser stretching forces in the present invention, stability in shape and dimension of the moulded products is highly superior to those obtained in the prior process and various shapes and configurations as desired can be easily presented on integrally foamed seats. The top portion and the side portion of the cover material can be made of different materials from each other in colour, quality and the like so that a variety of design or decorative effects can be obtained with ease.

In the same prior art integrally moulding process using the vacuuming step, polyvinyl chloride (PVC) sheets or fabrics are used as the covering materials of the seats. In the case of the PVC sheets, however, they tend to loose their grains formed on the surface due to excessive stretching forces applied through deep drawing of the sheets by vacuuming. Some countermeasures must be taken to prevent or decrease this loss of grain in order to maintain the appearance of the covering sheets similar to that of natural leathers. On the other hand, fabrics are so permeable to air that suction operations are not necessarily effective to properly shape the fabrics into the deep configurations of the mould. Some countermeasures are required to be taken here again to reduce air permeability of the fabrics. In contrast, the present invention does not require any of the countermeasures which otherwise would lead to additional steps, labours and costs, because the cover materials are not subject to excessive deep stretching forces in the process of the present invention.

## Claims

1. A process for moulding a foamed seat integrally with a cover material therefor in order to produce a seat cushion, comprising the steps of:

a) providing a cover material (11) having a top portion (21) and a side portion (22) conjoined together at a joint (23), the top portion having an area approximately equal to an area of a top surface of the seat cushion, the side portion being an elongate member having a length sufficient to encircle the overall periphery of the top portion and a width sufficient to cover the sides of the foamed seat (29) to be produced, opposite longitudinal ends of the elongate member being not secured to each other and overlapping with each other,

b) providing a shaping and foaming mould (10; 10') composed of an upper mould half (12; 42, 43) and a lower mould half (13; 44), the upper mould half having a top wall (42) and side walls (43) defining respectively a bottom and sides of the foamed seat to be produced, the lower mould half having a top surface (27) configured correspondingly to configurations of the top surface of the seat and having suction ports (18) formed therethrough, the two halves being closable at a mating face (25; 46) therebetween,

c) setting the cover material in the mould by positioning the joint along the mating face such that only the top portion of the cover material is in contact with the top surface of the lower mould half, and the side portion and the joint are left outside the mould,

d) closing the upper and lower mould halves relative to each other to clamp the cover top portion at its circumferential edge immediately inside the joint so that the top portion will not be displaced from the position initially set in the mould,

e) heating the top portion of the cover material to a temperature at which the material of the top portion is softened for stretching under tension,

f) vacuum shaping the heated top portion into the configurations of the top surface of the lower mould half by vacuum operation through the suction ports,

g) supplying foaming stock (29') onto the shaped top portion of the cover material placed in the closed mould halves to cause the stock to foam thereby to secure the top portion of cover material at its rear face integrally with the top surface of the foamed seat,

h) taking out from the mould the foamed seat with said top portion of the cover material adhered integrally thereto and the side portion unadhered to the sides of the foamed seat, and

i) enveloping the sides of the foamed seat with the unadhered side portion of the cover material to complete the integrally moulded sitting part of the seat cushion.

2. A process as claimed in claim 1, wherein the top surface (27) of the lower mould half (13; 44) is formed with surface patterns (28) such as those similar to quilting patterns.

3. A process as claimed in claim 1 or claim 2, wherein the cover material (11) is placed onto the lower mould half (13; 44) with its side portion (22) turned inside out.

4. A process as claimed in claim 1 or claim 2, wherein the cover material (11) is set to the upper mould half (12) without turning its side portion (22) inside out.

5. A process as claimed in any of the preceding claims, wherein the cover material (11) has at its side portion (22) at least one cut out portion (24).

**Patentansprüche**

1. Verfahren zum Formen eines geschäumten Sitzes zusammen mit einem für diesen vorgesehenen Bezugmaterial, um ein Sitzpolster herzustellen, mit den Schritten:

a) Vorsehen eines Bezugmaterials (11) mit einem Oberteil (21) und einem Seitenteil (22), die an einer Verbindungsstelle (23) miteinander verbunden sind, wobei das Oberteil eine Fläche aufweist, die annähernd gleich der oberen Fläche des Sitzpolsters ist, wobei das Seitenteil als langgestrecktes Teil ausgebildet ist, das eine Länge aufweist, die ausreichend ist, um den gesamten Umfang des Oberteils zu umschließen, und das eine Breite aufweist, die ausreichend ist, um die Seiten des herzustellenden geschäumten Sitzes (29) zu bedecken, wobei entgegengesetzte Enden in Längsrichtung des langgestreckten Teils nicht aneinander befestigt sind und sich einander überlappen,

b) Vorsehen einer formgebenden und ausschäumbaren Form (10; 10'), die aus einer oberen Formhälfte (12; 42, 43) und einer unteren Formhälfte (13; 44) zusammengesetzt ist, wobei die obere Formhälfte eine obere Wand (42) und Seitenwände (43) aufweist, die einen Boden bzw. Seiten des herzustellenden geschäumten Sitzes umgrenzen, wobei die untere Formhälfte eine obere Fläche (27) aufweist, die entsprechend den Ausgestaltungen der oberen Fläche des Sitzes ausgebildet ist und die durch sie hindurchreichende Saugkanäle (18) aufweist, wobei die beiden Hälften über eine Anlagefläche (25; 46) zwischen diesen verschließbar sind,

c) Einbringen des Bezugmaterials in die Form, wobei die Verbindungsstelle derart längs der Anlagefläche in Stellung gebracht wird, daß lediglich das Oberteil des Bezugmaterials mit der oberen Fläche der unteren Formhälfte in Berührung steht, und daß das Seitenteil und die Verbindungsstelle außerhalb der Form gelassen werden,

d) Verschließen der oberen und der unteren Formhälfte relativ zueinander, wobei das Bezugoberteil unmittelbar innenseitig der Verbindungsstelle entlang seiner Umfangskante eingeklemmt wird, so daß sich das Oberteil nicht aus seiner ihm ursprünglich gegebenen Stellung in der Form verschiebt,

e) Erwärmen des Oberteils des Bezugmaterials auf eine Temperatur, bei der das Material des Oberteils erreicht, so daß es unter Zug streckbar ist,

f) Vakuumformen des erwärmten Oberteils in die Ausgestaltungen der oberen Fläche der unteren Formhälfte durch ein Vakuumsaugen über die Saugkanäle,

g) Aufbringen eines schäumenden Materiales (29') auf das in den geschlossenen Formhälften angeordnete geformte Oberteil des Bezugmaterials, wobei das Material schäumen gelassen wird, wodurch das Oberteil des Bezugmaterials an seiner rückwärtigen Fläche mit der oberen Fläche des geschäumten Sitzes verbunden wird,

h) Herausnehmen des geschäumten Sitzes aus der Form, wobei das Oberteil des Bezugmaterials an diesem haftet und das Seitenteil nicht an den Seiten des geschäumten Sitzes haftet, und

i) Einhüllen der Seiten des geschäumten Sitzes mit dem nicht haftenden Seitenteil des Bezugmaterials, um den integral geschäumten Sitzteil des Sitzpolsters zu vervollständigen.

2. Verfahren nach Anspruch 1, bei dem die obere Fläche (27) der unteren Formhälfte (13; 44) mit Oberflächenmustern (28) versehen ist, die Steppmustern entsprechen.

3. Verfahren nach Anspruch 1 oder 2, bei dem das Bezugmaterial (11) mit umgestülptem Seitenteil (22) auf der unteren Formhälfte (13; 44) aufgebracht ist.

4. Verfahren nach Anspruch 1 oder 2, wobei das Bezugmaterial (11) auf die obere Hälfte (12) aufgebracht ist, ohne daß dabei sein Seitenteil (22) umgestülpt ist.

5. Verfahren nach einem der vorhergehenden Ansprüche, wobei das Bezugmaterial (11) an seinem Seitenteil (22) zumindest einen eingeschnittenen Bereich (24) aufweist.

## Revendications

1. Procédé pour mouler un siège en mousse, celle-ci étant solidaire d'un matériau de couverture afin de produire un coussin de siège, comprenant les phases consistant à:

a) prévoir un matériau de couverture (11) ayant une partie supérieure (21) et une partie latérale (22) réunies ensemble suivant un joint (23), ladite partie supérieure ayant une aire à peu près égale à celle de la surface supérieure du coussin du siège, la partie latérale étant un élément allongé ayant une longueur suffisante pour entourer la totalité de la périphérie de la partie supérieure, et une largeur suffisante pour recouvrir les côtés du siège en mousse (29) à fabriquer, les extrémités longitudinales opposées de l'élément allongé n'étant pas fixées l'une à l'autre et se recouvrant l'une l'autre,

b) prévoir un moule (10, 10') de mise en forme et de moussage, formé d'une moitié supérieure de moule (12, 42, 43) et d'une moitié inférieure de moule (13, 44), la moitié supérieure du moule ayant une paroi supérieure (42) et des parois latérales (43) définissant respectivement le fond et les côtés du siège en mousse à produire, la moitié inférieure du moule ayant une surface supérieure (27) de configuration correspondant à celle de la surface supérieure du siège et ayant des orifices d'aspiration (18) formés à travers elle, les deux moitiés pouvant être fermées entre elles sur une surface de jonction (25, 46),

c) poser le matériau de couverture dans le moule en plaçant le joint le long de ladite surface de jonction de telle façon que seule la partie supérieure du matériau de couverture est en contact avec la surface supérieure de la moitié inférieure du moule, et la partie latérale et le joint sont laissés à l'extérieur du moule,

d) fermer les moitiés supérieure et inférieure du moule l'une sur l'autre pour serrer ladite partie supérieure de couverture par son bord circonférentiel immédiatement à l'intérieur du joint de façon que la partie supérieure ne soit pas déplacée de la position initialement fixée dans le moule,

e) chauffer la partie supérieure du matériau de couverture jusqu'à une température pour laquelle le matériau de ladite partie supérieure est ramolli pour un étirage sous tension,

f) former la partie supérieure chauffée sous vide à la configuration de la surface supérieure de la moitié inférieure du moule par une action du vide à travers les orifices d'aspiration,

g) distribuer une matière moussante (29') sur la partie supérieure du matériau de couverture mis en forme placé dans les moitiés fermées du moule pour astreindre la matière à mousser et fixer ainsi la partie supérieure du matériau de couverture par sa face arrière solidairement avec la surface supérieure du siège en mousse,

h) retirer dudit moule le siège en mousse avec ladite partie supérieure du matériau de couverture collée solidairement à ladite mousse et ladite partie latérale non collée sur les côtés du siège en mousse et,

i) envelopper les côtés dudit siège en mousse avec ladite partie latérale non collée du matériau de couverture afin d'achever l'assise du coussin de siège, moulée d'une seule pièce.

2. Procédé suivant la revendication 1, dans lequel ladite surface supérieure (27) de la moitié inférieure du moule (13, 44) présente des dessins superficiels (28) tels que ceux qui sont analogues aux dessins de piquage.

3. Procédé suivant la revendication 1 ou 2, dans lequel le matériau de couverture (11) est placé sur la moitié inférieure du moule (13, 44) avec sa partie latérale (22) tournée avec la face interne vers l'extérieur.

4. Procédé suivant la revendication 1 ou 2, dans lequel le matériau de couverture (11) est posé sur la moitié supérieure (12) du moule sans tourner sa partie latérale (22) avec la face interne vers l'extérieur.

5. Procédé suivant l'une quelconque des revendications précédentes, dans lequel le matériau (11) de couverture comporte dans sa partie latérale (22) au moins une partie découpée (24).

# Fig. 1

## Fig. 2

## Fig. 2a

2

*Fig. 3*

*Fig. 4*

## Fig. 5

## Fig. 6

*Fig. 7*

*Fig. 8*

*Fig. 9*